# EUROPÄISCHE PATENTSCHRIFT

(11) **EP 2 219 852 B1**
(45) Veröffentlichungstag und Bekanntmachung des Hinweises auf die Patenterteilung: **06.06.2012**
(21) Anmeldenummer: 08852356.8
(22) Anmeldetag: 20.11.2008
(51) Int. Cl.: B29C 70/08, B29C 70/24

(54) **VORRICHTUNG UND VERFAHREN ZUR HERSTELLUNG EINES VERSTÄRKTEN SCHAUMWERKSTOFFES**
DEVICE AND METHOD FOR PRODUCING A REINFORCED FOAM MATERIAL
DISPOSITIF ET PROCÉDÉ DE FABRICATION D'UNE MOUSSE RENFORCÉE

(30) Priorität: 21.11.2007 DE 102007055684; 21.11.2007 US 4004 P
(43) Veröffentlichungstag der Anmeldung: 25.08.2010
(73) Patentinhaber: Airbus Operations GmbH, 21129 Hamburg (DE); Evonik Röhm GmbH, 64293 Darmstadt (DE)
(72) Erfinder: RIPPERT, Jörg, 64673 Zwingenberg (DE); LANG, Uwe, 34329 Nieste (DE); ROTH, Matthias Alexander, 64347 Griesheim (DE); ENDRES, Gregor, Christian, 85276 Pfaffenhofen/Ilm (DE); WEBER, Hans-Juergen, 27283 Verden (DE)
(74) Vertreter: Maiwald Patentanwalts GmbH
(86) Internationale Anmeldenummer: PCT/EP2008/065923
(87) Internationale Veröffentlichungsnummer: WO 2009/065896

(56) Entgegenhaltungen:
- DE-A1-102005 024 408

## Beschreibung

### TECHNISCHES GEBIET

Die vorliegende Erfindung betrifft das technische Gebiet der Herstellung von Verbundwerkstoffen. Insbesondere betrifft die Erfindung eine Vorrichtung zur Herstellung eines verstärkten Schaumwerkstoffes und zur Aufnahme eines textilen Halbzeuges in einen Haken. Außerdem betrifft die Erfindung ein System zur Herstellung von verstärkten Schaumwerkstoffen, sowie ein Verfahren zur Aufnahme von textilen Halbzeugen in einem Haken zur Verstärkung von Schaumwerkstoffen.

### HINTERGRUND DER ERFINDUNG

Aufgrund ihres guten Verhältnisses von Steifigkeit beziehungsweise Festigkeit zur Dichte finden im Bereich des Flugzeugbaus Verbundwerkstoffe und insbesondere Sandwich-Konstruktionen einen breiten Anwendungsbereich. Kernverbunde werden im allgemeinen aus einer oberen und einer unteren Deckschicht beziehungsweise Decklage gebildet, zwischen denen sich zur Erhöhung der Steifigkeit beispielsweise eine aus vertikal verlaufenden Zellen mit hexagonalem Querschnitt gebildete wabenartige Kernstruktur befindet.

Das spezifische mechanische Potential von Schaumstoffen im Vergleich zu solchen Wabenstrukturen ist aufgrund ihrer Struktur niedriger. Dennoch sind Schaumstoffe vor allem bei der Bauteilherstellung sowie im Bereich der erweiterten Bauteileigenschaften aufgrund ihrer Multifunktionalität für die Anwendung in Kernverbunden für strukturelle Luftfahrtanwendungen von Interesse. Daher werden unterschiedliche Versuche unternommen, die mechanischen Eigenschaften der Schaumstoffe zu erhöhen, ohne einen zu großen Zuwachs bei der Dichte zu verzeichnen. Mittels Nähtechnik, Einbringung von Pins, oder ähnlichen Verfahren wird lokal der Kern verstärkt, ohne das Gewicht der Struktur stark zu erhöhen. Zudem besteht bei verschiedenen Verfahren die Möglichkeit, die mechanischen Eigenschaften der Kernstruktur durch lokale Variation der Pindichte und des Pinwinkels die mechanischen Eigenschaften der Struktur auf den Anwendungsfall und lokal maßzuschneidern. Neben den statisch interessanten mechanischen Eigenschaften weisen diese Kernstrukturen zusätzlich noch eine Eigenschaft auf, die für den Impact, also den Einschlag beziehungsweise die Größe des Impactschadens sehr interessant sind. Bei verstärkten Schaumstoffen zum Beispiel kann eine rissstoppende Wirkung festgestellt werden.

Diese Kernverbunde mit einem Hartschaumkern weisen unter anderem im Bereich thermischer und akustischer Isolation sowie bei ihrer Herstellung Vorteile gegenüber den Wabenstrukturen auf, erweisen sich jedoch dadurch als nachteilhaft, dass sie nur vergleichsweise geringe mechanische Eigenschaften aufweisen. Um diese mechanischen Nachteile zu kompensieren, werden Nähtechniken eingesetzt, mit denen Fasern, Faserbündel oder Fäden in Hartschaumbauteile eingebracht werden können. Nach einem Harzinfiltrationsprozess tragen die mit Fasern durchsetzten Bereiche dann zur mechanischen Verstärkung des Schaumstoffs bei.

Die standardmäßig zur Verstärkung von Schaumstoffen eingesetzten Nähverfahren bestehen darin, mittels einer Nadel einen Schaumstoff zu durchdringen und gleichzeitig dabei den Faden, beziehungsweise die Faserbündel oder Fasern durch den Hartschaumstoff zu ziehen. Zur Fixierung des Fadens werden zwei verschiedene Methoden angewendet. Zum einen kann mittels des sogenannten Tuften-Nähverfahrens ein Faden durch die Hartschaumstoffschicht gezogen werden und in einem auf der entgegengesetzten Seite befindenden Substrat wie beispielsweise Silikonkautschuk fixiert werden. Nach Fertigstellung der Naht kann das Substrat entfernt werden.

Das zweite Nähverfahren gehört in die Kategorie der Zweiseiten-Nähverfahren, wobei ein Oberfaden von einer Decklage des Kernverbundes aus mit einer Nadel durch den Schichtaufbau gestochen wird. Der Oberfaden wird anschließend auf der gegenüberliegenden Seite des Schichtaufbaus durch einen Unterfaden fixiert.

Bedingt dadurch, dass Nadel und Faden gleichzeitig in den Schaumstoff eintreten, wird eine Lochgröße in dem Schaumstoff erzeugt, die größer als der Durchmesser der eingebrachten Fasermenge ist. Wird beispielsweise der Hartschaumstoffweiterverarbeitet wie beispielsweise bei der Infiltration, wird der verbleibende Hohlraum der Löcher, welcher nicht durch Faserbündel gefüllt ist, mit dem Harz gefüllt.

Die bekannten Nähverfahren weisen die Gemeinsamkeit auf, dass zunächst eine Nadel den Schaumstoff durchdringt und dabei gleichzeitig den Faden in den Schaumstoff einbringt. Hierbei erstreckt sich während des Einstechens in den Schaumstoff der Faden parallel zu und im Wesentlichen über die ganze Länge der Nadel. Die Lochgröße des Einstichloches wird somit durch den Nadeldurchmesser und die Stärke des Fadens bestimmt.

Ein Nachteil all dieser bekannten Verfahren besteht daher darin, dass nach dem Rückzug der Nadel aus dem Schaumstoff das verbleibende Loch im Verhältnis zur Stärke des eingebrachten Fadens zu groß ist. Dies führt dazu, dass nach der Infiltration mit einem Harz der nicht mit Fasern ausgefüllte Lochbereich mit Harz gefüllt ist, wodurch die Verbesserung der mechanischen Eigenschaften nicht wie gewünscht durch die Fasern übernommen wird, sondern verfahrensabhängig im Wesentlichen auf dem eingebrachten Harz beruht. Die Verbesserung der spezifischen, das heißt gewichtsbezogenen mechanischen Eigenschaften ist im Vergleich zu Wabenstrukturen jedoch zu gering für das im Flugzeugbau notwendige Leichtbaupotential, so dass eine Anwendung derartig verstärkter Schaumstoffe nur selten in Frage kommt.

Um die Wichtigkeit und die Vorteile der vorliegenden Erfindung zu verdeutlichen, sei das Folgende zum technischen Gebiet der Herstellung von verstärkten Material angemerkt:
Bei der Untersuchung der Auswirkungen von Titan-Pinverstärkungen auf das Versagensbild des Kernverbundes kann festgehalten werden, dass die Schadensfläche bei verstärkten Schaumstoffen klar auf dem Bereich innerhalb einer Innenreihe begrenzt bleibt. Somit ist er klar lokal eingeschränkt. Bei weiteren Untersuchungen können die Auswirkungen des Abstandes verstärkender Bereiche zueinander bestimmt werden. Besteht bei einer relativ dichten Verstärkung das Versagen der Deckschichten aus einem komplexen Zusammenspiel aus lokaler und globaler Biegung sowie Schubversagen der Deckschichten, ist mit sinkender Steifigkeit, bedingt durch eine niedrigere Verstärkungsdichte das Deckschichtversagen biegedominiert. Das Schadensbild zeigt einen lokalisierten Schaden und Mikrorisse in der impactierten Decklage, sowie keinen umseitigen Schaden. Die in die Decklagen eingedrungenen Pins sind im Bereich der Impactierung ausgezogen. Des Weiteren tritt Faserbruch auf, sowie eine lokale Ablösung des Kerns von der Decklage im Bereich der Impactierung. Diese praktischen Ergebnisse finden gute Übereinstimmung mit theoretischen Simulationen. Ebenfalls in diesem Zusammenhang können CAI-Untersuchungen gemacht werden, die zeigen, dass bei einem unverstärkten Schaumstoff der Hauptversagensmechanismus im Mikrobuckling der Deckschichten liegt. Bei verstärkten Schaumstoffen ist es hingegen das Ablösen/Auslösen der Pins. Es können neben dem NDT-Verhalten verstärkter Schaumstoffe auch die Abhängigkeiten vom Verstärkungswinkel untersucht werden. Ein Ergebnis dabei ist, dass der Grenzwert zu Schadenseinleitung durch Auszug der Pins aus der Decklage stark vom Pinwinkel abhängt. Bei einer 10° Verstärkung ist der Grenzwert, bei der ein nennenswerter Schaden entsteht, mehr als doppelt so hoch wie bei einer 20° Verstärkung. Bei der Untersuchung (sowohl experimentell als auch mittels FEM-Analyse) des Energieabsorptionsvermögens von verstärkten Schaumstoffen unter Druckbelastung kann gezeigt werden, dass durch eine Dickenverstärkung das Energieabsorptionsvermögen stark gesteigert werden kann. Ein maßgeblicher Achtungspunkt dafür ist, dass der Abstand der Verstärkungselemente kleiner ist als die halbe Wellenlänge der Faltungen, die bei einem unverstärkten Kernverbund gleichen Aufbaus entstehen.

Verstärkung mittels versteifter Pins:
In industriellen Entwicklungsprojekten konnte ein neuer Kernwerkstoff entwickelt werden, der den Eigenschaften der 48 kg/m³ Honeycornb-Wabe entspricht und dabei 10% an Gewicht einspart. Dieser neue Kern besteht aus einem leichten Trägerschaum, der mit dünnen Pins verstärkt wird, um die strukturellen Eigenschaften zu verbessern. Bei dem verstärkenden Halbzeug handelt es sich um dünne stabförmige Elemente beliebigen Querschnitts. Voraussetzung ist, dass sie über eine ausreichende Eigensteifigkeit verfügen, da sie sonst nicht verarbeitet werden können. Die verwendeten Pins haben einen Durchmesser von 0,279 - 0,711 mm. Unter Berücksichtigung der jeweiligen Werkstoffeigenschaften können die Pins aus allen drei Materialklassen kommen, beispielsweise aus FVK, Titanlegierungen, Glas, Nicalon oder Quarz. Bei dem entwickelten Verfahren werden die Pins ultraschallgestützt in den Schaumstoff eingeschossen und in einem zweiten Schritt an der Oberfläche umgewandelt. Das entstandene Produkt wird unter dem Markennamen K-COR™ vertrieben. Alternativ dazu können die Pins auch in die Decklage eindringen. Kommerziell erhältlich ist dieses Produkt unter dem Namen X-COR™. Großer Vorteil dieser Methode ist, dass die Verstärkungshalbzeuge in einem separaten Prozessschritt als Endlosprodukt hergestellt werden können. Gerade bei Faserverbundhalbzeugen, deren Eigenschaften stark vom Faservolumengehalt und der Faserorientierung abhängt, ist dies sehr positiv. Der Konstrukteur hat damit die Möglichkeit, durch Variation der lokalen Pindichte, -länge, - durchmesser und des Pinwinkels einen für jede Anwendung optimalen Kern zu konzipieren. Die möglichen Winkel erstrecken sich von senkrechten Pins für besonders druckbeanspruchte Bauteilregionen bis hin zu einem Winkel zwischen 20° und 30° für Schubverstärkung.

Armierung mittels trockener Halbzeuge:
Schaumstoffe trocken zu armieren ist auf unterschiedlichen Verfahrenswegen möglich: Nähverfahren, Wickel-/Flechtverfahren und Stapelverfahren. Die entstehenden Produkte unterscheiden sich sowohl in der Qualität als auch der Flexibilität der Verstärkungen erheblich. Die Fertigstellung der trocken armierten Schaumstoffkerne erfolgt in einem anschließenden Infiltrationsprozess.

Nähverfahren:
Bei den Nähverfahren gilt es zwischen zwei prinzipiell unterschiedlichen Verfahrensarten zu unterscheiden. Den Einseit-Nähverfahren mit nur einem Oberfaden (zum Beispiel Tuften, Blindstich) und den Zweiseit-Nähverfahren bestehend aus einem Ober- und einem Unterfaden. Zunächst werden die Zweiseit-Nähverfahren betrachtet. Generell gibt es aus der Textilverarbeitung verschiedene Arten an möglichen Stichtypen. Beispiele hierfür sind der Steppstich und der Kettenstich.

Von diesen Sticharten hat sich der Doppelsteppstich als am geeignetsten für die Armierung eines Schaumstoffes erwiesen. Zur Bildung des Doppelsteppstichs kommt ein Ober- und Unterfaden in der Textilindustrie, auch als Nadel- und Greiferfaden bezeichnet, zum Einsatz. Der Nadelfaden wird mit Hilfe des Nadelöhrs, das in der Spitze der Nadel sitzt, in der Nadel gehalten und durch das Bauteil gestochen. Bei der Rückwärtsbewegung der Nadel bildet der Nadelfaden eine Schlinge aus, die von der Greiferspitze erfasst wird. Durch die Rotationsbewegung des Greifers wird die Schlinge aufgeweitet und um den Greifer gezogen. Die Nadelfadenschlinge legt sich durch diesen Vorgang um Greiferfaden, wodurch er fixiert wird. Die Lage des Verschlingungspunktes wird über die Fadenspannung eingestellt. In der Textilindustrie ist es üblich, durch gleiche Ober- und Unterfadenspannung den Verknotungspunkt in der Mitte des Nähguts zu positionieren. Dadurch wird unter anderem eine höhere Dehnbarkeit der Naht erreicht. Bei Einsatz des Doppelsteppstichs in der Faserverbundtechnologie führt diese mittige Anordnung des Knotenpunktes zu einer Reihe von unerwünschten Nebeneffekten: Das Ziehen des Fadens im Substrat verstärkt die sowieso schon entstehenden Ondulationen der Fasern im Gelege. Da die Wirkungsweise von Faserverbunden aber sehr stark von der definierten Ausrichtung der Fasern im Laminat abhängt, müssen die Störungen, wenn schon unvermeidbar, möglichst gering gehalten werden.

Ein weiterer Nebeneffekt ist die Vernähung von Faserverbundtextilien, die ermöglicht neben einer Fixierung der einzelnen Lagen auch die Erhöhung der interlaminaren Scherfestigkeit, also eine Verstärkung in der dritten Dimension. Der Verschlingungspunkt bildet eine Schwachstelle in dieser Verstärkung und sollte daher nach Möglichkeit außerhalb des Wirkungsbereichs liegen. Aus den oben ausgeführten Gründen wird in der Faserverbundtechnologie der Verschlingungspunkt durch Erhöhung der Unterfadenspannung auf die Unterseite des Laminats gelegt. Bei den zu verarbeitenden Nähgarnen muss darauf geachtet werden, dass der Nadelfaden bei der Stichbildung starken Reibungs- und Querbelastungen ausgesetzt wird. Bedingt dadurch lassen sich nur Garne mit ausreichender Biegefestigkeit (zum Beispiel Kevlar) problemlos verarbeiten. Der Einsatz von Rovings ist nicht nur unter größten Schwierigkeiten, sondern manchmal auch gar nicht möglich. Das beschriebene Prinzip der Entstehung eines Doppelsteppstichs bei textilen Halbzeugen lässt sich auf den Verstärkungsprozess von Schaumhalbzeugen aufgrund der im Verhältnis zu Textilien großen Substrathöhe, nicht ohne Modifikationen übertragen. Hierzu wurden in entsprechenden Forschungsprojekten entsprechende Anlagen entwickelt.

Die englische Nähanlage beispielsweise ersetzt die einzelnen Nähnadeln durch einen Nadelbalken, mit dessen Hilfe gleichzeitig mehrere Stiche durchgeführt werden können. Das Greifsystem auf der Substratunterseite wird durch ein Prinzip aus dem Bereich der Projektilwebmaschinen substituiert. Nach dem Einstechen werden die Schlingen der Oberfäden auf der Unterseite aufgeweitet und der Unterfaden durch alle Schlaufen hindurchgeschossen. Bauteile, die mittels Doppelsteppstich verstärkt wurden, waren unter anderem Gegenstand von Untersuchungen. Bei verstärkten Schaumstoffen reduziert sich die Fläche abgelöster Deckschicht nach Impacteinwirkung erheblich, wobei in Abhängigkeit von der Stichdichte der äußerlich sichtbare Schaden nur unwesentlich kleiner ist als der innere Schaden. Der Betrag absorbierter Energie steigt zunächst an, bis er bei Perforation der Deckschicht wieder absinkt. In weiteren Untersuchungen zum Verhalten von nähtechnisch verstärkten Schaumstoffen konnte gezeigt werden, dass durch diese Art der Verstärkung zwar die Schadenstoleranz erhöht wird, genauso wie die nominalen mechanischen Eigenschaften, dass der Gewichtszuwachs aber nicht unerheblich ist. Einseit-Nähverfahren haben den großen Vorteil, gegenüber den bereits beschriebenen Zweiseit-Nähverfahren, dass das Bauteil nur von einer Seite erreichbar sein muss. Mögliche Nähverfahren wären beispielsweise der Blindstich und das Tuften.

Der Blindstich scheidet aufgrund der Stichbildung als Verstärkungsverfahren aus. Das Tuften als Nähverfahren ist im Doppelsteppstich verwandt mit dem Unterschied, dass der Unterfaden durch ein Substrat ersetzt wird, zum Beispiel Silizium, in dem die gebildete Schlinge bei Nadelrückzug fixiert wird.

Die DE 10 2005 024408 A1 zeigt ein Einseitennähverfahren, bei dem verschiedene Nadeln beim Verstärken von Schaumstoffen zum Einsatz kommen können. Insbesondere wird eine Hakennadel mit einem Klappmechanismus vorgestellt.

### DARSTELLUNG DER ERFINDUNG

Es ist eine Aufgabe der vorliegenden Erfindung, eine verbesserte Herstellung von verstärkten Schaumstoffen anzugeben.

Gemäß der vorliegenden Erfindung sind eine Vorrichtung zur Herstellung eines dreidimensional verstärkten Schaumwerkstoffes und zur Aufnahme eines textilen

Halbzeuges in einen Haken, sowie ein System mit den Merkmalen der unabhängigen Ansprüchen angegeben.

Die vorliegende Erfindung wird nur exemplarisch am Beispiel von Schaumstoffen ausgeführt, kann aber auch in anderen Bereichen Anwendung finden. Außerdem werden im Rahmen der vorliegenden Erfindung als Faserbündel Rovings aus einer Vielzahl von unverdrehten, gestreckten Einzelfasern oder Monofilamenten, Einzelfasern selbst sowie Fäden, die durch Verzwirnung von Einzelfasern oder Faserbündeln entstanden sind, verstanden. Sofern im Rahmen der vorliegenden Erfindung von der Stärke eines Faserbündels gesprochen wird, so ist hierunter die Summe aller Einzelfasern in einer komprimierten Form zu verstehen.

Weiterhin können die vorliegende erfindungsgemäße Vorrichtung, das System und das Verfahren im Bedarfsfall auch zur Herstellung ganz anderer Materialien mit Verstärkungsstoffen benutzt werden, die nicht unter den Begriff des textilen Halbzeuges fallen.

Gemäß einer beispielhaften Ausführungsform der vorliegenden Erfindung ist eine Vorrichtung zur Herstellung eines verstärkten Schaumwerkstoffes und zur Aufnahme eines textilen Halbzeuges in einen Haken angegeben. Dabei weist die Vorrichtung eine erste Untereinheit mit einer Transportvorrichtung auf sowie eine zweite Untereinheit mit einer Aufnahmevorrichtung. Dabei ist die Transportvorrichtung derart eingerichtet, dass das textile Halbzeug in die Aufnahmevorrichtung beförderbar ist. Die erste Untereinheit und die zweite Untereinheit hingegen sind derart eingerichtet, dass durch eine Relativbewegung der ersten Untereinheit relativ zur zweiten Untereinheit das textile Halbzeug in definierter Länge vorlegbar ist. Die Aufnahmevorrichtung der zweiten Untereinheit ist weiterhin derart ausgestaltet, dass durch eine Relativbewegung der Aufnahmevorrichtung relativ zum Haken das textile Halbzeug in den Haken einlegbar ist.

Die erfindungsgemäße Transportvorrichtung der ersten Untereinheit kann jede Vorrichtung sein, die in der Lage ist, das textile Halbzeug in eine vorgegebene Richtung zu transportieren. Beispielsweise soll das textile Halbzeug in die Aufnahmevorrichtung der zweiten Untereinheit eingeführt werden, um dort in einem Spalt der Aufnahmevorrichtung in einen Haken beispielsweise einer Hakennadel eingelegt zu werden. Beispielsweise geschieht dieses Einlegen, nachdem der Haken das zu verstärkende Material beziehungsweise den zu verstärkenden Schaumwerkstoff durchstochen hat. Diese Transportvorrichtung kann also beispielsweise durch so genannte Transportrollen realisiert werden, welche sich in gegenläufigem Sinne drehend derart nahe gegenüberstehen, dass ein textiles Halbzeug, welches sich in der Mitte zwischen den beiden Rollen befindet, vermittelt durch Reibungskräfte mit den Oberflächen der Rollen transportiert wird. Ebenso sind aber auch Transportbänder oder einzelne mechanische Greifer vorstellbar, die als Transportvorrichtung das textile Halbzeug entlang der vorgegebenen Achse transportieren. Ziel des Transports des textilen Halbzeuges ist es, eine definierte Länge des Halbzeuges in den Bereich hinter die Transportvorrichtung zu transportieren, um diese gewünschte Menge des Halbzeuges später entweder geschnitten oder ungeschnitten in das zu verstärkende Material einzubauen.

Die Relativbewegung der ersten Untereinheit relativ zur zweiten Untereinheit lässt in ihrer prinzipiellen Bedeutung drei unterschiedliche und unabhängige Bewegungsvarianten der Vorrichtung zu. Erstens ist damit eine Bewegung möglich, bei der die erste Untereinheit starr beziehungsweise fest an ihrer Position verharrt und die gesamte Bewegung durch eine Bewegung der zweiten Untereinheit vollzogen wird. Zweitens ist es auch möglich, dass die zweite Untereinheit fest an ihrer Position verharrt, und sich lediglich die erste Untereinheit bewegt. Der Begriff der Relativbewegung lässt aber auch eine dritte Möglichkeit der Bewegung zu, in der sich sowohl die erste Untereinheit als auch die zweite Untereinheit bewegen, solange dadurch wie in allen anderen Bewegungsvarianten das textile Halbzeug in definierter Länge vorlegbar ist.

Dabei kann diese und jede andere Bewegung der vorliegenden Erfindung durch beliebige Antriebsmittel erzeugt werde, also beispielsweise durch elektrische, mechanische, pneumatische oder hydraulische Antriebsmittel.

Der Begriff der definierten Länge ist dabei so zu verstehen, dass nach der Beförderung des textilen Halbzeuges in die Aufnahmevorrichtung und der Relativbewegung der ersten Untereinheit relativ zur zweiten Untereinheit die Position des textilen Halbzeuges im Vergleich zur Aufnahmevorrichtung und dadurch zu der Stelle, an der das Halbzeug später aufgenommen wird, angepasst wird. Dabei wird diese vorgegebene Länge meist durch die benötigte Länge des Halbzeuges in dem zu verarbeitenden Material bestimmt. Hier sind Materialdicke und Einstech- beziehungsweise Verlegewinkel, in welchem das Halbzeug in dem Material zur Verstärkung abgelegt werden soll wichtige Größen.

Der Begriff der Relativbewegung in dieser beispielhaften Ausführungsform der Erfindung wird auch für die Bewegung zur Einlegung des textilen Halbzeuges in den Haken verwendet. Dabei ist ein Relativbewegung der Aufnahmevorrichtung relativ zu dem das textile Halbzeug beziehungsweise das Faserbündel aufnehmenden Gegenstand, also zum Beispiel dem Haken gemeint. Das bedeutet, dass sowohl in einem ersten Fall die Aufnahmevorrichtung die Bewegung vollzieht und der Haken in seiner Position verharrt, als auch die umgekehrte Variante möglich ist. Dabei ist für den ersten Fall zu beachten, dass das textile Halbzeug mit der Aufnahmevorrichtung mechanisch und kräfteübertragend verbunden ist, so dass sich das textile Halbzeug bei einer Bewegung der Aufnahmevorrichtung in selber Richtung und selber Orientierung mitbewegt. Dadurch ist im ersten Fall ein Einlegen des textilen Halbzeuges in den Haken oder eine andere beliebige Vorrichtung zur Aufnahme des Halbzeugs möglich. Aber, auch der zweite Fall, in dem die Aufnahmevorrichtung ruht und somit aufgrund der mechanischen Verbindung auch das textile Halbzeug ruht, wird eine Bewegung des Hakens auf das textile Halbzeug zu die Aufnahme des Halbzeuges in den Haken bewerkstelligt. Aber auch eine Mischform aus diesen beiden Varianten ist möglich, bei dem sich beide Teile, also die Aufnahmevorrichtung und auch gleichzeitig der Haken bewegen, so dass das textile Halbzeug in den Haken eingelegt wird.

Somit ist dieses Ausführungsbeispiel der vorliegenden Erfindung in der Lage ein Loch im Schaumwerkstoff zu erzeugen und erst dann die Faser in den Schaumwerkstoff einzuziehen. Deshalb kann das erfindungsgemäße System eine Verstärkung von Schaumwerkstoffen mit Fasern dahingehend verbessern, dass im Wesentlichen die eingebrachten Fasern für die Verbesserung der mechanischen Eigenschaften des Schaumstoffkerns verantwortlich sind und nicht Harz, was in folgenden Infiltrationsprozessen in die zu großen Löcher um die Fasern herumfließt.

Die vorliegende erfindungsgemäße Vorrichtung schafft es also, die Vorteile von faserverstärkten Schaumwerkstoffen zu realisieren, ohne dabei die bisherigen Nachteile in Kauf nehmen zu müssen.

Gemäß einem weiteren Ausführungsbeispiel der vorliegenden Erfindung weist die Vorrichtung weiterhin mindestens ein Schneidwerkzeug auf, das derart eingerichtet ist, dass das textile Halbzeug in definierter Länge geschnitten werden kann.

Der Erfindung liegt der Gedanke zugrunde, die Faserbündel zur Verstärkung eines Schaumwerkstoffes nicht gleichzeitig während der Herstellung der Löcher, in welchen die Faserbündel letztlich gerichtet vorliegen sollen, einzubringen, sondern den Schaumwerkstoff zunächst von einer ersten Oberfläche aus in Richtung einer zweiten Oberfläche mit einem Durchgangsloch zu versehen und dann anschließend ein Stück eines textilen Halbzeuges oder ein Faserbündel, welches jenseits der zweiten Oberfläche bereitgestellt wurde, in das Durchgangsloch in Richtung der ersten Oberfläche einzuziehen. Dies gilt für dieses und alle anderen Ausführungsbeispiel der erfindungsgemäßen Vorrichtung.

Dieses Ziel soll weiterhin ergänzt werden um die Möglichkeit, durch lokale Variation der Halbzeugdichte oder auch Pindichte und des Winkels, in dem die Halbzeuge in den Schaumwerkstoff eingebracht werden, die mechanischen Eigenschaften der Struktur auf den Anwendungsfall und lokal benötigten mechanischen Charakteristika maßzuschneidern. Dies ist, wenn die Naht geschlossen bleiben soll, nur bedingt möglich. Deshalb kann die erfindungsgemäße Vorrichtung wie in dieser beispielhaften Ausführungsform mindestens ein Schneidwerkzeug enthalten, um das textile Halbzeug abzulängen. Dabei wird durch den einzelnen Bedarfsfall beispielsweise durch die Dicke des zu verstärkenden Schaumwerkstoffes und den Einzugswinkel des Halbzeuges in den Schaumwerkstoff die benötigte Länge des Halbzeuges vorgegeben.

Sollten spezielle textile Halbzeuge in der erfindungsgemäßen Vorrichtung verwendet werden, zu deren Durchtrennung spezielle Schneiden benötigt werden, sind diese speziellen Schneidwerkzeuge als beispielhafte Ausführungsformen möglich. Neben mechanischen Schneiden mit scharfen messerartigen Klingen sind auch Schneidwerkzeuge, die durch Trennungsverfahren aufgrund von Hitze, Ultraschall oder ein Durchschneiden mittels elektrischen Stroms oder mittels Licht realisieren, möglich.

Gemäß eines weiteren Ausführungsbeispiels der vorliegenden Erfindung ist das Schneidwerkzeug an der ersten Untereinheit angebracht.

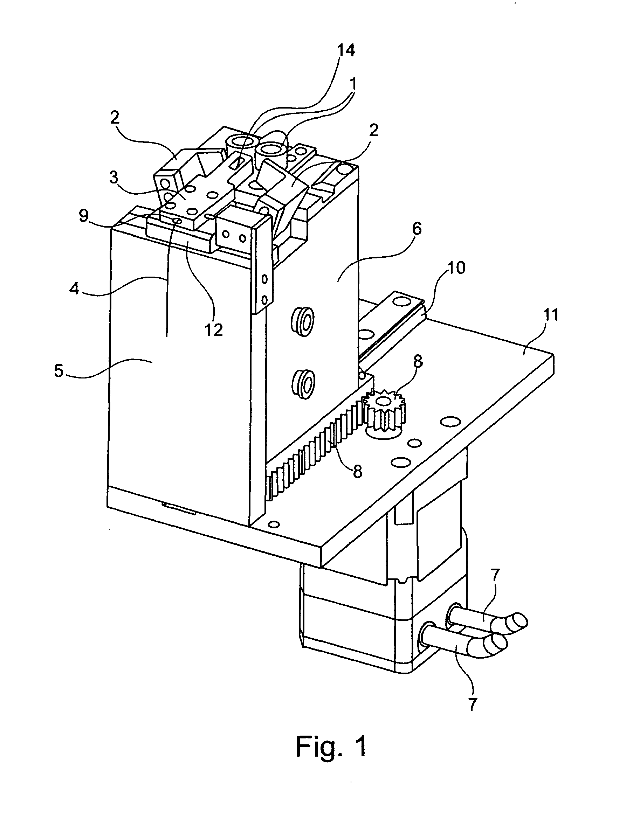

Diese beispielhafte Ausführung der erfindungsgemäßen Vorrichtung ist beispielsweise in Fig. 1 gezeigt, in der beispielhaft zwei Schneidwerkzeuge 2 auf der ersten Untereinheit 6 angebracht sind. Hierbei handelt es sich um mechanische Schneidwerkzeuge mit Klingen, wobei die oben genannten spezielleren Schneidwerkzeuge dadurch als mögliche Schneidwerkzeuge nicht ausgeschlossen sind.

Gemäß einem weiteren Ausführungsbeispiel der vorliegenden Erfindung befindet sich der Haken an einer so genannten Hakennadel.

Dabei ist mit dem Begriff Hakennadel eine Nähvorrichtung gemeint, die beispielsweise zum Einziehen von Faserbündeln in einen Schaumwerkstoff eingerichtet ist. So sind

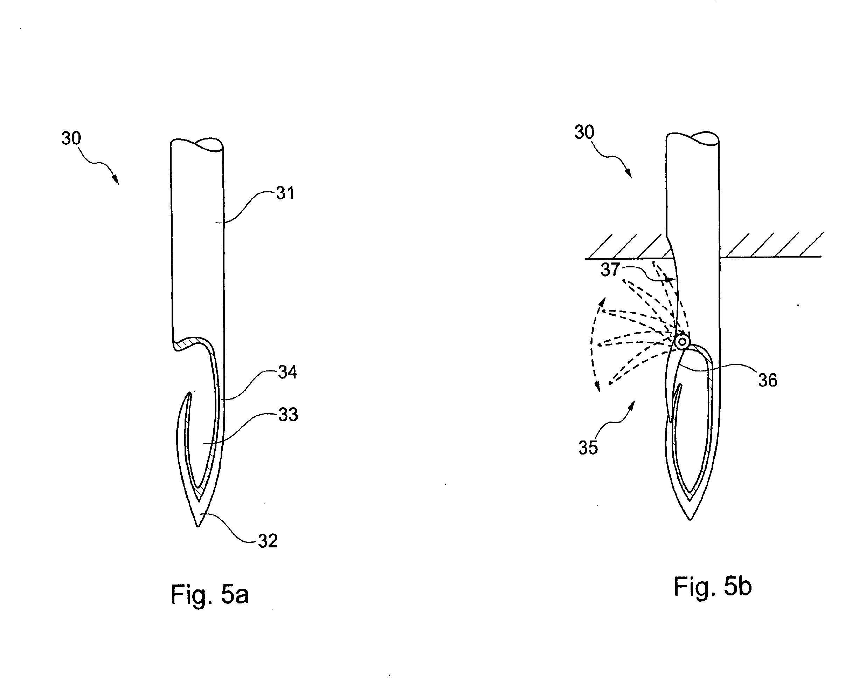

Nähvorrichtungen bekannt, welche besonders im Gebiet der Herstellung von Kernverbundkonstruktionen eingesetzt werden. Kernverbundkonstruktionen bestehen beispielsweise aus Sandwich-Konstruktionen oder Schaumstoffen, welche durch Kohlefasern oder andere Faserverbundstoffe verstärkt werden können. Um die erfindungsgemäße Vorrichtung für genau diesen Herstellungsfall technisch kompatibel zu machen, wird für solch eine Nähvorrichtung eine so genannte Hakennadel hierzu benutzt. Eine solche Hakennadel ist beispielhaft in den Figuren 5a und b gezeigt, wobei diese Hakennadel zusätzlich einen Verschlussmechanismus aufweisen kann.

Gemäß einem Ausführungsbeispiel der vorliegenden Erfindung weist die Vorrichtung weiterhin pneumatische Antriebsmittel auf, wobei diese pneumatischen Antriebsmittel zur Erzeugung zumindest eine der beiden Relativbewegungen eingerichtet sind.

Dabei wird unter pneumatischen Antriebsmittel sowohl die Mittel zur Erzeugung von Druckluft als auch die Heranleitung der Druckluft mittels Druckluftleitungen an die entsprechenden Bewegungsteile samt Dichtungen und Düsen beschrieben.

Gemäß einem weiteren Ausführungsbeispiel der vorliegenden Erfindung weist die Aufnahmevorrichtung weiterhin einen vertikalen Spalt auf. Dabei ist der vertikale Spalt derart eingerichtet, dass der Haken in den Spalt eingeführt werden kann. Weiterhin ist die Relativbewegung der ersten Untereinheit relativ zur zweiten Untereinheit derart ausführbar, dass sich nach der Ausführung dieser Relativbewegung die Mitte des textilen Halbzeuges in der Mitte des Spaltes befindet.

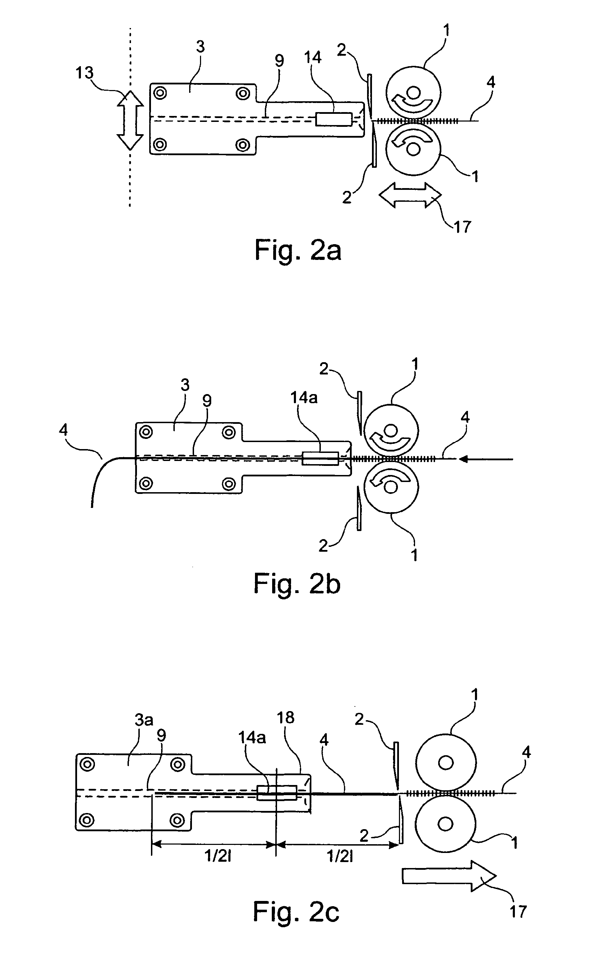

Dabei ist der Begriff der Mitte des textilen Halbzeuges anschaulich in Fig. 2c dargestellt. Die Mitte des textilen Halbzeuges wird also von der Stelle ab gemessen, an der das textile Halbzeug später und auch nur eventuell und je nach Bedarfsfall durch die Schneiden beziehungsweise das Schneidwerkzeug geschnitten wird. Der in Fig. 2c von den Schneiden links befindliche Teil des textilen Halbzeuges macht somit die gesamte Länge des Teiles des Halbzeuges aus, der dann in einem weiteren Schritt aufgenommen und im zu verstärkenden Material abgelegt wird. Die Relativbewegung der ersten Untereinheit relativ zur zweiten Untereinheit wird nun derart vollzogen, dass sich der Abstand von den möglichen Schneidwerkzeugen 2 zur Mitte des Spaltes der Aufnahmevorrichtung genauso lang ergibt wie der Abstand von der Mitte des Spaltes bis hin zum Ende des textilen Halbzeuges.

Dies gewährleistet bei einer Aufnahme des textilen Halbzeuges in einen Haken genau am Ort der Mitte des Spaltes und einem späteren Einziehen des textilen Halbzeuges in ein zu verstärkendes Schaummaterial, dass an jeder Stelle eines Loches im Schaumwerkstoff die gleiche Faserdichte vorliegt. Die Schlaufe, die sich bei der Aufnahme in den Haken aus dem Stück des Halbzeuges um den Haken herum bildet, hat also zwei gleich lange Enden.

Gemäß einem Ausführungsbeispiel der vorliegenden Erfindung weist die Vorrichtung als Transportvorrichtung mindestens eine Transportrolle auf.

Diese Transportrollen ermöglichen dabei einen stetigen und kontinuierlichen mechanischen Transport des textilen Halbzeuges in die Aufnahmevorrichtung. Diese Transportrollen sind beispielsweise in Fig. 1 deutlich unter der Bezugsziffer 1 dargestellt. Weiterhin wird in den Fign. 2a-f die Funktionsweise und die Bedeutung der Rollen zum Vorspulen des textilen Halbzeuges beziehungsweise des Rovings in einer Vogelperspektive deutlich gemacht. Um das textile Halbzeug, welches später als Verstärkung in dem Schaumwerkstoff eingesetzt werden kann, in passender Länge und mittig an die Stelle der Aufnahme durch den Haken bereitzustellen, übernehmen die Rollen das Vorspulen des Halbzeuges. In Kombination mit der Positionierung der Spaltmitte relativ zu Mitte des Teils des Halbzeuges, welcher sich innerhalb der erfindungsgemäßen Vorrichtung befindet, ermöglicht das Vorspulen des Rovings beziehungsweise des Halbzeuges die Bereitstellung des textilen Halbzeuges in vordefinierter Länge am Ort der späteren Aufnahme durch einen Haken. Dabei ist in diesem Zusammenhang mit dem Begriff "der Teil des Halbzeuges, welcher sich innerhalb der erfindungsgemäßen Vorrichtung befindet" derjenige Teil des Halbzeuges gemeint, welcher sich beispielsweise in Fig. 2c links von dem Schneidewerkzeug befindet. Dieser Startpunkt zur Messung der Länge des Halbzeuges innerhalb der erfmdungsgemäßen Vorrichtung wird deshalb gewählt, weil in einigen beispielhaften Ausführungsbeispielen die Länge des zu verarbeitenden Halbzeuges durch die Schneiden bei einem Schneidevorgang bestimmt wird.

Gemäß einem weiteren Ausführungsbeispiel der vorliegenden Erfindung ist ein System zur Herstellung von verstärkten Materialien angegeben, welches ein unteres und ein oberes Teilsystem aufweist. Dabei ist zwischen den beiden Teilsystemen das zu verstärkende Material anbringbar und das untere Teilsystem weist eine Vorrichtung gemäß einem der vorherigen Ausführungsbeispiele der Erfindung auf. Das obere Teilsystem hingegen weist einen Nadelstangenantrieb und / oder eine Tufting-Nähmaschine auf.

Der Erfindung liegt der Gedanke zugrunde, die Faserbündel zur Verstärkung eines Schaumwerkstoffes nicht gleichzeitig während der Herstellung der Löcher, in welchen die Faserbündel letztlich gerichtet vorliegen sollen, einzubringen, sondern den Schaumwerkstoff zunächst von einer ersten Oberfläche aus in Richtung einer zweiten Oberfläche mit einem Durchgangsloch zu versehen, um dann anschließend ein Faserbündel, welches jenseits der zweiten Oberfläche bereitgestellt wurde, in das Durchgangsloch in Richtung der ersten Oberfläche einzuziehen.

Dabei entspricht dem Faserbündel das textile Halbzeug und die Bereitstellung des textilen Halbzeuges jenseits der zweiten Oberfläche wird durch das untere Teilsystem also eine Vorrichtung gemäß einem der vorherigen Ausführungsbeispiele der Erfindung bewerkstelligt. Die Herstellung der Löcher hingegen, in welchen die Faserbündel beziehungsweise das textile Halbzeug letztlich gerichtet vorliegen sollen und die damit gleichzeitige Annäherung des Hakens zur Aufnahme des textilen Halbzeuges an die Aufnahmevorrichtung wird durch das obere Teilsystem also beispielsweise einen Nadelstangenantrieb gewährleistet.

Da dieses erfindungsgemäße System zur Umsetzung eines Einseiten-Nähverfahrens in der Lage ist, und der Haken beziehungsweise die Hakennadel nicht gleichzeitig ein Loch im Schaumstoff erzeugt und die Faser in dem Schaumstoff einzieht, kann das erfindungsgemäße System eine Verstärkung von Schaumwerkstoffen mit Fasern dahingehend verbessern, dass im Wesentlichen die eingebrachten Fasern für die Verbesserung der mechanischen Eigenschaften des Schaumstoffkerns verantwortlich sind.

Um durch das zu verstärkende Material mittels des oberen Teilsystems hindurchnähen zu können, ist das Material zwischen die beiden Teilsysteme sowohl anbringbar als auch befestigbar. Die Durchgangslöcher, die durch den Nadelstangenantrieb erzeugt werden, können in den Schaumwerkstoff unter beliebiger Winkellage eingebracht werden.

Dies gilt auch für alle vorherig genannten Vorrichtungen.

Die Orientierung der Durchgangslöcher kann insbesondere individuell auf die jeweilige Form des zu verstärkenden Schaumwerkstoffes sowie die im Betrieb zu erwartenden Lastsituationen angepasst werden. Das System gibt die Möglichkeit eine Kernstruktur für einen spezifischen Last- und Anwendungsfall maßzuschneidern.

Gemäß einem weiteren Ausführungsbeispiel der vorliegenden Erfindung weist das erfindungsgemäße System weiterhin einen Transportmechanismus zum Transport des zu verstärkenden Materials auf, wobei der Transportmechanismus derart eingerichtet ist, dass das Material zwischen den beiden Teilsystemen in vorgegebenen Schritten transportiert werden kann.

Um an verschiedenen Stellen innerhalb des Schaumwerkstoffes in der Ebene des Schaumwerkstoffes Verstärkungen einbringen zu können, muss der Werkstoff mittels des Transportsystems beziehungsweise des Transportmechanismus so zwischen die beiden Teilsysteme positioniert werden, dass bei Erzeugung eines Durchgangslochs in dem Schaumwerkstoff die gewünschte lokale Stelle unter gewünschter Winkellage mit einem textilen Halbzeug versehen werden kann. Dabei können verschiedene beliebige Muster genäht werden, die es ermöglichen, die lokalen mechanischen Eigenschaften der Kernstruktur für den spezifischen Last- beziehungsweise Anwendungsfall maßzuschneidern. Dabei ist von entscheidender Bedeutung, dass mittels des Schneidwerkzeuges das textile Halbzeug nach je einem Arbeitsschritt abgelängt werden kann, so dass sich keine geschlossene Naht über einen größeren räumlichen Bereich des Werkstoffes erstreckt und somit die Dichte der so genannten Pins innerhalb des Werkstoffes bis auf kleinste lokale Einheiten herunter örtlich variiert werden kann.

Dabei können die vorgegebenen Schritte des Transportmechanismus durch ein Softwareprogramm oder eine Steuereinheit vordefiniert beziehungsweise ausgeführt werden.

Gemäß einem weiteren Ausführungsbeispiel der vorliegenden Erfindung weist das System weiterhin mindestens eine Computereinheit zur Steuerung der erfindungsgemäßen Vorrichtung, des Transportmechanismus und/oder des erfindungsgemäßen oberen Teilsystems auf.

Um sowohl den Vorgang des Vorspulens des textilen Halbzeuges durch die Transportvorrichtung zu ermöglichen, als auch mindestens eine der Relativbewegungen der erfindungsgemäßen Vorrichtung steuern zu können, ist in diesem Ausführungsbeispiel eine Computereinheit angegeben. Weiterhin kann die Computereinheit den Transportmechanismus, der den Schaumwerkstoff an die richtige lokale zu verstärkende Position verfährt, steuern.

Aber auch das erfindungsgemäße obere Teilsystem, welches einen Nadelstangenantrieb aufweist, kann durch die erfindungsgemäße Computereinheit gesteuert werden.

Somit kann mittels des erfindungsgemäßen Systems eine vollautomatisierte und computergesteuerte Prozesseinheit realisiert werden, die die Herstellung eines verstärkten Schaumwerkstoffes und die Aufnahme eines textilen Halbzeuges in einen Haken vollautomatisch umsetzt.

Gemäß eines weiteren Ausführungsbeispiels der vorliegenden Erfindung ist ein Verfahren zur Aufnahme von textilen Halbzeugen in einem Haken zur Verstärkung von Materialien angegeben, wobei das Verfahren folgende Schritte aufweist: Vorlegen des Halbzeuges auf einer Unterseite des zu verstärkenden Materials, Positionieren der Halbzeugmitte an den Ort der Aufnahme, Einstechen des Hakens in das zu verstärkende Material, Einlegen des Halbzeuges in den Haken, Rückzug des Hakens mit gleichzeitiger Positionierung des Halbzeuges im zu verstärkenden Material, und Dunchtrennen des textilen Halbzeugs in definierter Länge von dem Rückzug des Hakens an der Unterseite des zu Verstärkenden Materials mittels eines Schneidewerkzeuges.

Um ein Einseiten-Nähverfahren zu realisieren, bei dem das Erzeugen der Durchgangslöcher in dem Werkstoff nicht gleichzeitig mit der Durchführung des verstärkenden Materials, also der Pins, vollzogen wird, sind obige erfindungsgemäße Verfahrensschritte angegeben. Dabei beschreiben die Fign. 2a bis f den Teil des Verfahrens, der sich an der Unterseite des zu verstärkenden Materials abspielt. Dort wird also das textile Halbzeug durch das Vorspulen eines Rovings gezeigt sowie die Positionierung der Halbzeugmitte an den Ort der darauf folgenden Aufnahme. Das Einstechen des Hakens in das zu verstärkende Material kann beispielsweise durch das erfindungsgemäße obere Teilsystem bewerkstelligt werden und wird beispielsweise mit einer speziellen Nähvorrichtung vollzogen, die zum Einziehen von Faserbündeln in einen Schaumstoff gedacht ist. Das Einlegen des Halbzeuges in den Haken kann beispielsweise durch eine Relativbewegung des Hakens relativ zum textilen Halbzeug realisiert werden. Um das textile Halbzeug in dem zu verstärkenden Material abzulegen, zieht sich der Haken durch den Werkstoff zurück, wobei anschließend das textile Halbzeug beziehungsweise das Faserbündel aus dem Haken losgelassen wird.

Dabei wird die Ausgangssituation des Verfahrens erreicht, wobei mit dem Begriff "Ausgangssituation" hier nicht der Zustand des bereits bearbeitenden Materials gemeint ist, sondern beschreibt vielmehr den Zustand und die Situation der Vorrichtung, welche das Verfahren umsetzt. Nach Erreichen dieser Ausgangsituation kann also das Verfahren erneut und in dem Anfangszustand der Vorrichtung gestartet und durchgeführt werden.

Eine kontinuierlich wiederholte Variante des erfindungsgemäßen Verfahrens, die lokal auf dem Schaumwerkstoff unterschiedlich dicht Anwendung finden kann, ermöglicht es, großflächig aber lokal differenziert, Schaumwerkstoffe zu verstärken, und dabei die Lochgröße beim Einziehen des textilen Halbzeuges in den Schaumwerkstoff zu reduzieren. Somit erhält man aufgrund des erfindungsgemäßen Verfahrens beispielsweise ein Kernverbund mit einem Hartschaumkern, die thermischen und akustischen Isolationsvorteile sowie die Herstellungsvorteile gegenüber Wabenstrukturen beibehält und zusätzlich durch das erfindungsgemäße Verfahren verbesserte mechanische Eigenschaften gegenüber herkömmlichen Schaumwerkstoffen oder herkömmlichen verstärkten Schaumwerkstoffen vorweist.

Gemäß einem weiteren Ausführungsbeispiel der vorliegenden Erfindung ist ein Verfahren angegeben, welches den zusätzlichen folgenden Schritt aufweist: Loslassen des textilen Halbzeuges aus dem Haken.

Um einzelne begrenzte Stücke des textilen Halbzeuges in dem Schaumwerkstoff lokal ablegen zu können und dabei lokal unterschiedliche Pindichten zu erreichen, müssen die jeweiligen Stücke des textilen Halbzeuges vor Einbringung in das zu verstärkende Material abgelängt, also beispielsweise abgeschnitten werden. Nach Durchführung der Verstärkungen und Ablegung in dem zu verstärkenden Material muss das textile Halbzeug durch den Haken losgelassen werden. Danach kann der Haken an einer anderen Stelle des zu verstärkenden Schaumstoffs erneut durch den ganzen Prozess ein Faserbündel beziehungsweise ein Stück textiles Halbzeug ablegen. Dabei kann der Prozess beziehungsweise der Verfahrensschritt des Loslassens beispielsweise durch das Abschneiden mittels einer Schere oder eines beliebigen elektrischen, thermischen oder mechanischen Schneidwerkzeuges geschehen. Aber auch das Öffnen der Schlaufe, die sich bei dem erfindungsgemäßen Verfahren aus dem textilen Halbzeug um den Haken beispielsweise einer Nadel gebildet hat, kann geöffnet werden. Dieses Öffnen geschieht dabei an der Oberseite des zu verstärkenden Materials, da das Halbzeug bereits auf der Unterseite des zu verstärkenden Materials aufgenommen wurde und anschließend durch das Material hindurchgezogen wurde.

Aber auch ein Öffnen des Hakens, so dass das textile Halbzeug durch beispielsweise Gravitation, oder ein Ziehen des Halbzeugs in Auslöserichtung, herausgelöst wird ist möglich.

Wie beim vorhergehenden Schritt des Loslassen des textilen Halbzeuges aus dem Haken ist auch dieser zusätzliche Verfahrensschritt notwendig, um eine lokal variierende Pindichte erzeugen zu können und somit die mechanischen Eigenschaften des Schaumwerkstoffes maßzuschneidern. Dabei können als Schneidwerkzeuge sowohl mechanische Schneiden eingesetzt werden, aber auch Schneidtechnologien, die mittels elektrischer, optischer oder thermischer Technik arbeiten, sind zur Einsetzung als Schneidwerkzeug möglich. Da das textile Halbzeug unterhalb des Schaumwerkstoffes bereitgestellt wird, um es anschließend durch den Schaumwerkstoff teilweise an die Oberfläche zu ziehen, wird das Schneiden des textilen Halbzeuges beispielsweise an der Unterseite des Schaumwerkstoffes durchgeführt.

Gemäß einem weiteren Ausführungsbeispiel der vorliegenden Erfindung befindet sich der Haken an einer Hakennadel und das Halbzeug wird durch eine Relativbewegung des Halbzeuges relativ zur Hakennadel in den Haken eingelegt.

Gemäß einem weiteren Ausführungsbeispiel der vorliegenden Erfindung werden die Verfahrensschritte wiederholt durchgeführt und es entsteht durch das Auslassen einer Durchtrennung des textilen Halbzeuges eine geschlossene Naht.

Sollte es für eine spezielle Anwendung von Vorteil sein, eine geschlossene Naht in einem gewissen Bereich des Schaumwerkstoffes zu produzieren, so kann das erfindungsgemäße Verfahren durch das Nichtbetätigen des Schneidewerkzeuges ein- und dasselbe Stück des textilen Halbzeuges in vielfacher Länge des sonstigen verwendeten Halbzeugstückes in dem Schaumstoff ablegen und so eine lange geschlossene Naht erzeugen.

Gemäß einem weiteren Ausführungsbeispiel der vorliegenden Erfindung stellt das Halbzeug ein Faserbündel dar, wobei die Fasern des Faserbündels in dem zu verstärkenden Material parallel und verstreckt abgelegt werden.

Beispielsweise kann dieser Haken an einer Nadel mit hakenförmiger Spitze angebracht sein. Dieser greift den Roving beziehungsweise das textile Halbzeug mittig an der Unterseite des Werkstoffes auf und zieht ihn durch den Schaumstoff. Durch das Falten werden sehr viele Fasern in den Schaum eingezogen und sie liegen parallel und verstreckt vor.

Gemäß einem weiteren Ausführungsbeispiel der vorliegenden Erfindung ist die Verwendung eines verstärkten Schaumwerkstoffes in einem Flugzeug angegeben, welcher Schaumwerkstoff mit der erfindungsgemäßen Vorrichtung, dem erfindungsgemäßen System oder durch das erfindungsgemäße Verfahren hergestellt wurde.

Gemäß eines weiteren Ausführungsbeispiels der vorliegenden Erfindung ist ein Flugzeug mit einem verstärkten Schaumwerkstoff angegeben, der mit der erfindungsgemäßen Vorrichtung, dem erfindungsgemäßen System oder durch das erfindungsgemäße Verfahren hergestellt wurde.

Die beispielhaften Ausführungsformen der Vorrichtung und des Systems gelten für das Verfahren und umgekehrt.

Mit der vorliegenden Erfindung wird eine Vorrichtung geschaffen, welche besonders im Gebiet der Herstellung von Kernverbundkonstruktionen eingesetzt werden kann. Kernverbundkonstruktionen bestehen beispielsweise aus Sandwich-Konstruktionen oder Schaumstoffen, welche durch Kohlefasern oder andere Faserverbundstoffe verstärkt werden können.

Weitere Ausführungsbeispiele und Vorteile der Erfindung ergeben sich aus der folgenden Figurenbeschreibung.

Teilaspekte des Verfahrens sind in der US-Provisional Application US 60/685,296 offenbart.

### KURZE BESCHREIBUNG DER ZEICHNUNGEN

Die Darstellungen in den Figuren sind schematisch und nicht maßstäblich.
Fig. 1 zeigt eine schematische, dreidimensionale Darstellung der erfindungsgemäßen Vorrichtung zur Herstellung eines verstärkten Schaumwerkstoffes und zur Aufnahme eines textilen Halbzeuges in einen Haken gemäß einem Ausführungsbeispiel der vorliegenden Erfindung.
Fign. 2a-2f zeigen schematische zweidimensionale Darstellungen der erfindungsgemäßen Vorrichtung zur Herstellung eines verstärkten Schaumwerkstoffes und zur Aufnahme eines textilen Halbzeuges in einen Haken gemäß einem Ausführungsbeispiel der vorliegenden Erfindung.
Fig. 3 zeigt eine schematische dreidimensionale Darstellung des erfindungsgemäßen Verfahrens durch eine erfindungsgemäße Vorrichtung oder ein erfindungsgemäßes Systems.
Fig. 4 zeigt eine schematische zweidimensionale Darstellung des erfindungsgemäßen Systems gemäß einem Ausführungsbeispiel der vorliegenden Erfindung.
Fig. 5a und b zeigen eine schematische dreidimensionale Darstellung einer Hakennadel, welche in der vorliegenden Erfindung verwendet werden kann.
Fig. 6 zeigt eine schematische dreidimensionale Darstellung eines oberen Teilsystems gemäß einem Ausführungsbeispiel der vorliegenden Erfindung.

Im Folgenden werden mit Verweis auf die Figuren bevorzugte Ausführungsbeispiele der vorliegenden Erfindung beschrieben.

In der folgenden Figurenbeschreibung werden für die gleichen oder ähnlichen Elemente die gleichen Bezugsziffern verwendet.

Die folgenden hier getroffenen Ausführungen gelten ebenfalls für ein Flugzeug, welches ein verstärktes Material enthält, der mit der erfindungsgemäßen Vorrichtung, dem erfindungsgemäßen System oder durch das erfindungsgemäße Verfahren hergestellt wurde. Ebenso gelten die Ausführungen für die Verwendung eines verstärkten Schaumwerkstoffes in einem Flugzeug, wobei der Schaumwerkstoff mit der erfindungsgemäßen Vorrichtung, dem erfindungsgemäßen System oder durch das erfindungsgemäße Verfahren hergestellt wurde.

Fig. 1 zeigt in einer dreidimensionalen schematischen Darstellung ein Ausführungsbeispiel der erfindungsgemäßen Vorrichtung. Dabei ist eine erste Untereinheit 6 mit einer Transportvorrichtung 1 gezeigt, wobei die Transportvorrichtung 1 hier beispielhaft als Transportrollen 1 ausgeführt ist. Weiterhin ist die zweite Untereinheit 5 abgebildet, wobei diese hier als vertikale Einheit fest auf einer Basisplatte 11 fixiert ist. Die erste Untereinheit 6 hingegen kann sich in diesem Ausführungsbeispiel linear auf der Linearachse 10 bewegen und wird durch einen mechanischen Antrieb 8 bewerkstelligt. Dabei muss die Relativbewegung nicht wie hier gezeigt, auf einer Linearachse ablaufen, sondern kann beliebig dreidimensionale Kurven beschreiben.

In beispielhafter Ausführung kann die Bewegung durch Pneumatik mit entsprechenden Druckluftzuleitungen 7 realisiert werden. Prinzipiell ist aber jeder elektrische, hydraulische oder mechanische Antrieb zur Erzeugung der Relativbewegung zwischen der ersten Untereinheit und der zweiten Untereinheit möglich. In diesem Beispiel liegt also der Fall vor, in der sich die zweite Untereinheit 5 nicht bewegt, wohingegen die Relativbewegung zwischen den beiden Untereinheiten durch die erste Untereinheit 6 verursacht wird. Diese erste Untereinheit ist in diesem Ausführungsbeispiel als Schlitten auf der Linearachse gezeigt. Um das Ablängen beziehungsweise das Abschneiden des textilen Halbzeuges zu gewährleisten, sind beispielhaft zwei mechanische Schneiden 2 gezeigt, die auf der ersten Untereinheit angebracht sind. Ist das textile Halbzeug durch Transportrollen 1 in entsprechender Länge vorgelegt worden und wurde mittels der Relativbewegung zwischen der ersten und der zweiten Untereinheit die künftige Mitte des textilen Halbzeuges auf die Mitte des Spalts 14 innnerhalb der Aufnahmevorrichtung 3 positioniert, so kann das textile Halbzeug abgelängt werden. Nur so kann erreicht werden, dass die einzelnen Stücke des textilen Halbzeuges, also einzelne Faserbündel oder einzelne Rovings einzeln und gezielt an Stellen innerhalb des Schaumstoffs angebracht werden können. Die Aufnahmevorrichtung 3 mit ihrem Spalt 14 weist einen Kanal 9 für das textile Halbzeug 4 auf, so dass das Halbzeug mittels der Transportrollen durch die Aufnahmevorrichtung hindurch eingelegt werden kann. Das Ende kann, wie in Fig. 1 leicht ersichtlich, frei aus der Aufnahmevorrichtung 3 heraushängen.

Dabei ist von besonderer Bedeutung, dass sowohl die Variante der Transportvorrichtung, die Variante des Schneidwerkzeuges, die Variante zur Erzeugung der Relativbewegung zwischen der ersten und der zweiten Untereinheit sowie die Variante zur Erzeugung der Relativbewegung zwischen Aufnahmevorrichtung und Haken beispielhaft gewählt sind und gemäß vorhergehenden Abschnitten der vorliegenden Beschreibung in anderen Ausführungsformen möglich sind.

Die Relativbewegung 13 zwischen der Aufnahmevorrichtung 3 und dem Haken kann in diesem Fall beispielsweise durch den Schlitten 12 zur Querbewegung der Aufnahmevorrichtung 3 bewerkstelligt werden. Dies würde einer Relativbewegung entsprechen, bei welcher sich lediglich die Aufnahmevorrichtung bewegt und der Haken, der hier nicht gezeigt ist, ruht.

Durch die in Fig. 1 gezeigte erfindungsgemäße Vorrichtung kann der Grundgedanke der Erfindung realisiert werden. Durch die erfindungsgemäße Vorrichtung kann also erreicht werden, dass die Verbesserung der mechanischen Eigenschaften von Schaumstoffen wie gewünscht durch die Fasern übernommen werden und nicht, wie in bisher bekannten Verfahren im Wesentlichen auf dem eingebrachten Harz beruht.

Um einen solch verbesserten Schaumwerkstoff mit der erfindungsgemäßen Vorrichtung in einem automatisierten Prozess herstellen zu können, sind folgende Einzelschritte durch die in Fig. 1 gezeigte erfindungsgemäße Vorrichtung ausgeführt: Roving in definierter Länge vorlegen, Roving schneiden, Roving mittig in Nadel einlegen und Schlaufe in der Nadel an der Oberseite öffnen. In der Prozessautomation sind die einzelnen Funktionen wie hier in Fig. 1 folgendermaßen umgesetzt. Die gesamte Funktionseinheit besteht aus zwei Untereinheiten. Die erste Untereinheit 6, hier als Schlitten gezeigt, bewegt sich mit Hilfe einer Linearachse 10 auf der Basisplatte 11, wohingegen die zweite Untereinheit 5, hier als vertikale Einheit gezeigt, starr auf der Basisplatte montiert ist. Im ersten Schritt fördern die Rollen 1 den Roving 4 bis zur gewünschten Länge vorwärts. Das Textil wird dabei durch die Aufnahmevorrichtung 3 gefädelt und kann am anderen Ende frei hängen. Im nächsten Schritt verfährt der Schlitten 6 auf der Linearachse um den Weg, der erforderlich ist, dass die Mitte des Rovings sich exakt in der Mitte des Spaltes der Aufnahmevorrichtung 3 befindet. Ist der Roving positioniert, sticht die Hakennadel durch das Substrat und trifft auf der Substratunterseite in den Spalt von Einheit 3 beziehungsweise Aufnahmevorrichtung 3. Um den Roving in den Haken einzufädeln, ist die Aufnahmevorrichtung 3 auf einem Schlitten 12 gelagert, der beispielsweise pneumatisch angetrieben eine Seitwärtsbewegung machen kann. Ist der Haken im Spalt, zeigt die Öffnung auf die Seite, auf der der Roving vorgelegt wurde. Dabei ist hier mit Öffnung eine Öffnung des Hakens gemeint, um den Roving überhaupt in den Haken einlegen zu können. Beispielsweise kann dieser Haken auch durch ein Öffnen eines sonst geschlossenen Hakens bereitgestellt werden. Macht jetzt der kleine Schlitten eine Seitwärtsbewegung auf die Nadel zu, so wird der Roving in den Haken eingelegt. Bevor die Nadel eine Rückwärtsbewegung macht, wird der Roving mittels der Schneiden beziehungsweise des Schneidwerkzeuges 2 abgelängt.

Die folgenden Fign. 2a bis f zeigen verschiedene Zustände der erfindungsgemäßen Vorrichtung während des Durchführens des erfindungsgemäßen Verfahrens zur Herstellung eines verstärkten Schaumwerkstoffes und zur Aufnahme eines textilen Halbzeuges in einen Haken.

Fig. 2a zeigt eine schematische zweidimensionale Darstellung eines Ausführungsbeispiels der erfindungsgemäßen Vorrichtung. Dabei ist die Vorrichtung aus der Vogelperspektive gezeigt. Es ist die Transportvorrichtung beispielhaft als Transportrollen 1 gezeigt, die das textile Halbzeug 4 in den Kanal für das textile Halbzeug 9 innerhalb der Aufnahmevorrichtung 3 hineinbewegt. Der Spalt innerhalb der Aufnahmevorrichtung 14 gewährleistet später den Volumenbereich, in dem die Hakennadel den Roving beziehungsweise das Halbzeug aufnehmen kann. Fig. 2a zeigt dabei die Ausgangssituation des erfindungsgemäßen Verfahrens mittels der erfindungsgemäßen Vorrichtung. Dabei ist mit dem Pfeil 17 die Richtung der Relativbewegung der ersten Untereinheit relativ zur zweiten Untereinheit veranschaulicht, wobei die Schneiden 2 hier beispielhaft als mechanisches Schneidwerkzeug ausgebildet sind.

Fig. 2b zeigt hierbei den Zustand der erfindungsgemäßen Vorrichtung beim Durchführen des erfindungsgemäßen Verfahrens, wobei in diesem Schritt des Verfahrens das Vorspulen des textilen Halbzeuges durch die Transportrollen 1 gezeigt ist. Dabei ist deutlich zu sehen, dass im Spalt der Aufnahmevorrichtung das textile Halbzeug 14a zu sehen ist. Durch das Vorspulen des Halbzeuges ist der Kanal 9 für das textile Halbzeug in der Aufnahmevorrichtung 3 befüllt und das Ende des textilen Halbzeuges 4 hängt an der linken Seite der Figur frei.

Fig. 2c zeigt eine zweidimensionale schematische Darstellung der erfindungsgemäßen Vorrichtung während des Verfahrensschrittes, bei dem die Relativbewegung zwischen der ersten Untereinheit und der zweiten Untereinheit den Weg zurückgelegt hat, so dass die Mitte des Halbzeuges sich exakt in der Mitte des Spaltes der Aufnahmevorrichtung 14 befindet. Die Mitte des Spaltes 18 wird in einem darauf folgenden Schritt der Ort sein, an dem der Haken das textile Halbzeug aufnimmt. Dabei ist mit dem Pfeil 17 die Richtung der Relativbewegung der ersten Untereinheit relativ zur zweiten Untereinheit angedeutet. Dies beinhaltet oder schließt zumindest nicht aus, dass alle drei Möglichkeiten der Bewegungsart, nämlich dass sich sowohl die erste als auch die zweite Untereinheit bewegt, dass sich nur die erste Untereinheit bewegt oder aber dass sich nur die zweite Untereinheit bewegt, möglich sind.

In Fig. 2c ist deutlich zu sehen, dass der Teil des textilen Halbzeuges, der sich links von den Schneiden beziehungsweise des Schneidwerkzeuges 2 befindet, genau so positioniert wurde durch die Relativbewegung, dass die Mitte des Halbzeuges 4 genau in die Mitte des Spaltes 14a beziehungsweise 18 fällt. Dadurch wird gewährleistet, dass nach Aufnahme des Halbzeuges durch den Haken eine gleichmäßige Verteilung des textilen Materials innerhalb des Schaumstoffes gewährleistet wird.

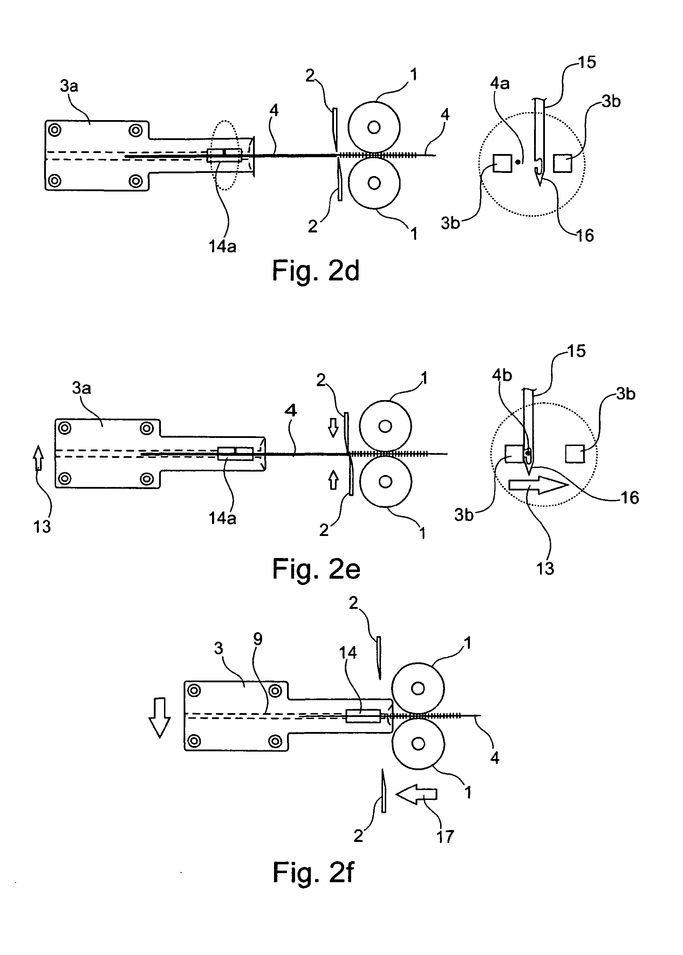

Fig. 2d zeigt eine schematische zweidimensionale Darstellung der erfindungsgemäßen Vorrichtung bei der Durchführung des erfindungsgemäßen Verfahrens. Dabei ist in Fig. 2d der Schritt des Einstechens der Nadel 15, welche einen entsprechenden Haken 16 aufweist, gezeigt. Der linke Bereich der Zeichnung 2d zeigt in Vogelperspektive die erfindungsgemäße Vorrichtung mit den Transportrollen 1 und dem Halbzeug 4 und den Schneiden 2. Dabei ist auf der rechten Seite des Bildes 2d der Bereich vergrößert gezeigt, in welchem sich der Spalt der Aufnahmevorrichtung 3 befindet. Dieser rechte Bereich der Fig. 2d zeigt diesen Spalt samt Nadel mit Haken 15 und 16 sowie die Aufnahmevorrichtung im Querschnitt 3b. Ebenso ist im rechten Teil der Figur das textile Halbzeug in Querschnitt 4a gezeigt. In dieser Situation, in der die Nadel ein Loch durch den darüber liegenden Schaumstoff gestoßen hat und zur Aufnahme in den Spalt der Aufnahmevorrichtung eingedrungen ist, ist die Nadel 15 mit Haken 16 noch um eine gewisse Distanz von der textilen Faser entfernt. Erst durch eine spätere Relativbewegung kann die Faser in die Nadel 15 eingelegt werden.

Fig. 2e zeigt ebenso wie die vorherige Fig. 2d auf der linken Seite die Vogelperspektive der erfindungsgemäßen Vorrichtung und auf der rechten Seite den Querschnitt des Spaltes der Aufnahmevorrichtung 3. Dabei ist nun auf der linken Seite zu sehen, dass durch die Relativbewegung der Aufnahmevorrichtung 3 relativ zum Haken beziehungsweise der Hakennadel 15, angedeutet durch den Pfeil 3, das Einlegen des Textils in die Nadel beziehungsweise in den Haken vollzogen werden kann. Dabei ist die Aufnahmevorrichtung im Querschnitt 3b zu sehen und dient hier quasi als Widerstand beim Einlegen des Halbzeuges 4b. Das textile Halbzeug wird aufgrund des Anpressdrucks, der von der hier im Querschnitt gezeigten Aufnahmevorrichtung 3 herrührt, in die Öffnung der Nadel 15 hineingedrückt. Dabei ist auch hier von entscheidender Bedeutung, dass die Relativbewegung alle drei Möglichkeiten der Bewegung der Aufnahmevorrichtung und des Hakens zulässt. Ist das Halbzeug in den Haken eingelegt, so kann mittels der Schneiden 2 der Roving beziehungsweise das textile Halbzeug abgelängt werden. Danach kann die Nadel eine Rückwärtsbewegung machen und dem Roving beziehungsweise das textile Halbzeug in den zu verstärkenden Schaumstoff einlegen. An der Oberseite des Werkstoffs, die hier nicht gezeigt ist, findet dann ein Loslasse b oder Lösen der Schlaufe statt, die sich aus dem Verstärkungsmaterial um den Haken gebildet hat.

Fig. 2f zeigt eine schematische zweidimensionale Darstellung aus der Vogelperspektive der erfindungsgemäßen Vorrichtung. Dabei deuten die beiden Pfeile die entsprechenden Gegenbewegungen zu den vorher geschehenen Relativbewegungen an, um die Ausgangssituation nach Rückzug der Nadel zu erreichen. Danach kann ein erfindungsgemäßer erster Schritt des Verfahrens wiederholt werden, nachdem die Position des zu verstärkenden Materials verändert wurde.

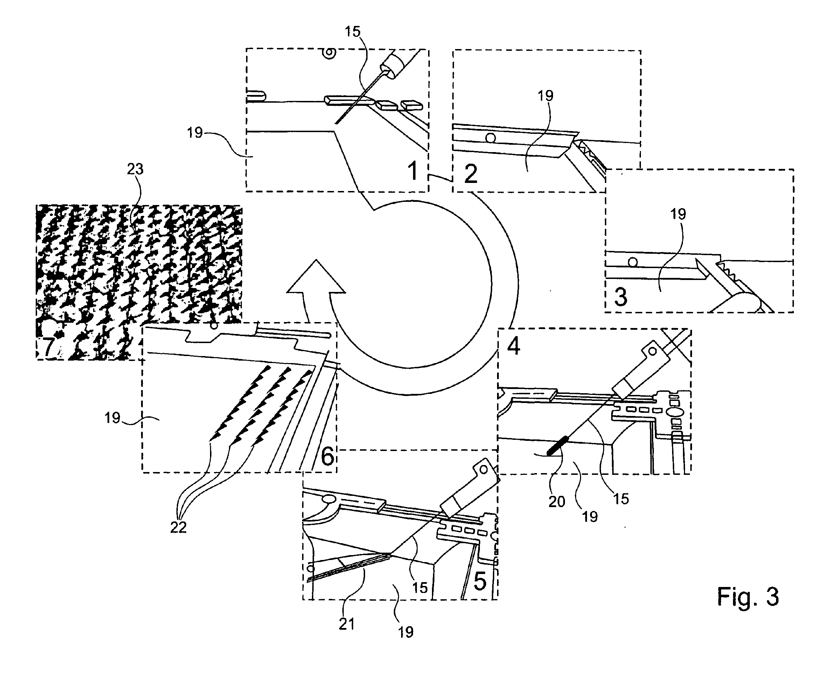

Fig. 3 zeigt eine schematische dreidimensionale Darstellung des erfindungsgemäßen Verfahrens gemäß der erfinderischen Vorrichtung oder des erfindungsgemäßen Systems. Dabei sind in 7 aufeinander folgenden Bildern einzelne Schritte von der Oberseite des Schaumstoffs aus betrachtet zu sehen. Es ist die Nadel 15 zu sehen, die sich noch an der Oberseite des Schaumstoffes befindet. Der Schaumwerkstoff 19 liegt in rechteckiger Form vor und soll im Folgenden mit einem textilen Halbzeug an vordefinierten Stellen verstärkt werden. In der Unterfigur 4 ist zu sehen, wie nach einem Einstechen der Nadel 15 in den Schaumstoff 19 bei Rückzug der Nadel innerhalb des vorher erzeugten Loches ein eingehaktes textiles Halbzeug nach Durchführung durch den Schaumstoff an der Oberseite des Schaumstoffes heraustritt. In der darauffolgenden Unterfigur 5 sieht man, wie eine Schere zum manuellen Abschneiden des textilen Halbzeuges das textile Halbzeug von der Hakennadel 15 löst. In der nächsten Unterfigur 6 sind verschiedene durchgeführte Stücke textilen Halbzeuges zu sehen, wobei diese Stücke in drei parallelen Reihen durch den Schaumwerkstoff gelegt wurden. In der nächsten und letzten Unterfigur 7 ist eine Vergrößerung des Schaumwerkstoffes 19 zu sehen, bei dem der komplette Schaumstoff nach Einarbeitung aller Stücke des textilen Halbzeuges regelmäßig verstärkte Stellen aufweist.

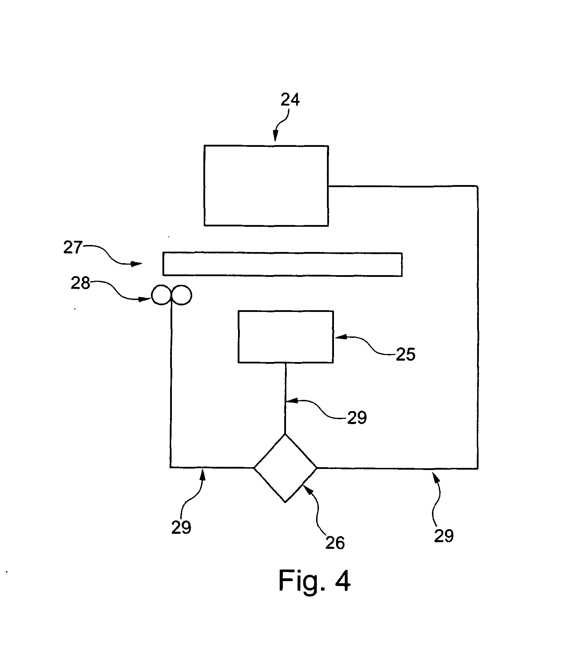

Fig. 4 zeigt eine schematische zweidimensionale Darstellung des erfindungsgemäßen Systems zur Herstellung von verstärkten Materialien. Dabei ist ein oberes Teilsystem 24 und ein unteres Teilsystem 25 gezeigt, zwischen welchen eine mittlere Einheit 27 zur Auflage des zu bearbeitenden Stoffes gezeigt ist. Um diesen zu bearbeitenden Stoff bezüglich der Einstechstelle, die durch die obere Einheit 24 definiert wird, positionieren zu können, ist ein Tranportmechanismus 28 für die mittlere Einheit gegeben. Eine Computereinheit 26 ist dabei in der Lage, sowohl den Transportmechanismus der mittleren Einheit zu steuern, aber auch die obere und die untere Einheit beziehungsweise das obere und das untere Teilsystem sind durch Leitungen von der Computereinheit zu den jeweiligen zu steuernden Einheiten komplett automatisiert steuerbar. Dabei kann das obere Teilsystem einen Nadelstangenantrieb aufweisen und das untere Teilsystem kann eine Vorrichtung gemäß der erfindungsgemäßen Vorrichtung sein. Mittels des in Fig. 4 gezeigten Systems ist also eine komplett automatisierte Herstellung verstärkter Schaumwerkstoffe möglich, wobei sogar lokal variierende Pindichten durch das erfindungsgemäße System realisierbar sind.

Die Fig. 5a und5 b zeigen zwei unterschiedlich ausgestaltete Nadeln, mit denen beispielhaft das erfindungsgemäße Verfahren durchgeführt werden kann, oder die zur Benutzung der erfindungsgemäßen Vorrichtung verwendet werden können. Die Fig. 5a zeigt eine erste Ausführungsform einer Hakennadel 30, die einen geradlinigen Schaft 31 aufweist, welcher sich an seiner Vorderseite zu einer Spitze 32 verjüngt. Im Bereich der Spitze 32 weist die Nadel 30 eine Öse 33 auf, die jedoch auf einer Seite mit einer Öffnung versehen ist, um dadurch ein Faserbündel in den Ösenbereich 33 der Nadel 30 einbringen zu können.

Die in der Fig. 5b dargestellte Hakennadel 30 entspricht im Wesentlichen der in der Fig. 5a Gezeigten, weist jedoch zusätzlich zu dieser einen Verschlussmechanismus 35 auf, welcher ausgebildet ist, um die Öffnung der Öse 33 während des Herausziehens der Hakennadel 30 aus einem Schaumstoffwerkstoff zu verschließen. Der Verschlussmechanismus 35 besteht im Wesentlichen aus einer Klappe 36, welche in ihrer Ausgangsstellung in einem verjüngten Bereich 37 am Schaft der Nadel 30 zum Liegen kommt. Sobald diese Klappe 36 beim Herausziehen der Nadel aus dem Schaumwerkstoff an diesem mit ihrem freien Ende anstößt, bewegt sich diese gegen den Uhrzeigersinn aus ihrer Ausgangsstellung in eine Stellung, in der sie die Öffnung der Öse 33 vollständig verschließt, wie dies in der Fig. 5b gezeigt ist. Hierdurch wird zum einen verhindert, dass beim Herausziehen der Nadel 30 aus dem Schaumwerkstoff das Hakenende des zweiten Schenkels die Innenwandung eines Durchgangslochs in dem Schaumwerkstoff verletzt. Zum anderen wird durch den Verschlussmechanismus 35 sichergestellt, dass keine Fasern während des Einziehens in den Schaumwerkstoff sich aus dem Faserbündel lösen. Wird der Schaumwerkstoff inklusive bereits applizierter Decklagen durchstochen, verhindert der Verschlussmechanismus 35, dass auf dem Rückweg Fasern aus den Textilien von der Nadel 30 ergriffen und in das Lochinnere gezogen werden.

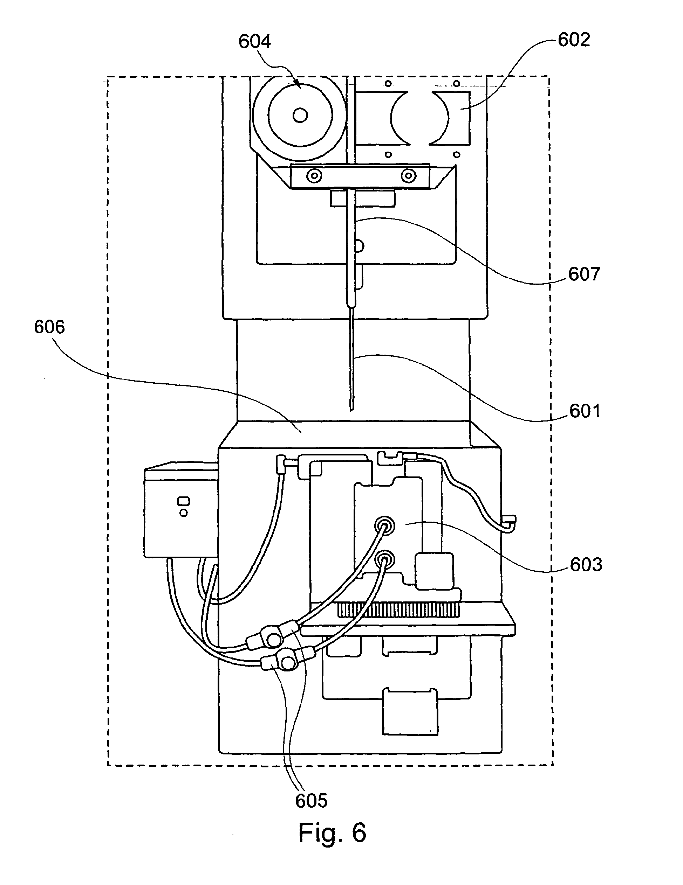

Fig. 6 zeigt eine schematische dreidimensionale Darstellung eines erfindungsgemäßen Systems 600 mit oberem 602 und unterem Teilsystem 603. Dabei ist die Nadel 601, die nach dem Durchstechen des zu verstärkenden Stoffs das textile Halbzeug in dem unteren Teilsystem 603 aufnimmt, hier an der Stange 607 angebracht. Diese Stange ist Teil des Nadelstangenantriebs 604. Weiterhin sind Zuleitungen für den Antrieb des unteren Teilsystems 605 zu sehen. Der Bereich zwischen oberem und unterem Teilsystem, in welchen der Stoff zur Verstärkung eingebracht wird ist mit 606 gekennzeichnet.

### Bezugszeichenliste

- 1: Transportrollen
- 2: Schneiden
- 3: Aufnahmevorrichtung
- 3a: Aufnahmevorrichtung in positionierender Lage
- 3b: Aufnahmevorrichtung 3 im Querschnitt
- 4: textiles Halbzeug
- 4a: textiles Halbzeug im Querschnitt
- 4b: eingelegtes textiles Halbzeug
- 5: zweite Untereinheit
- 6: erste Untereinheit
- 7: Anschlüsse für Ansteuerung
- 8: Mechanik des Antriebs
- 9: Kanal für das textile Halbzeug
- 10: Linearachse
- 11: Basisplatte
- 12: Schlitten zur Querbewegung der Aufnahmevorrichtung 3
- 13: Richtung einer Relativbewegung der Aufnahmevorrichtung relativ zum Haken
- 14: Spalt in Aufnahmevorrichtung 3
- 14a: Spalt in Aufnahmevorrichtung 3 mit textilem Halbzeug
- 15: Nadel
- 16: Haken an der Nadel
- 17: Richtung der Relativbewegung der ersten Untereinheit relativ zur zweiten Untereinheit
- 18: Mitte des Spalts 14
- 19: Schaumwerkstoff
- 20: eingehacktes textiles Halbzeug nach Durchführung durch Schaumstoff
- 21: Schere zum manuellen Abschneiden des textilen Halbzeugs
- 22: durchgeführte Stücke textilen Halbzeugs in Reihen
- 23: kompletter Schaumstoff nach Einarbeitung aller Stücke textilen Halbzeugs
- 24: oberes Teilsystem
- 25: unteres Teilsystem
- 26: Computereinheit
- 27: Mittlere Einheit zur Auflage des zu bearbeitenden Stoffes
- 28: Transportmechanismus der mittleren Einheit
- 29: Leitungen zur Ansteuerung der verschiedenen Einheiten durch die Computereinheit
- 30: Hakennadel
- 31: Schaft
- 32: Spitze
- 33: Öse
- 34: erster Schenkel
- 35: Verschlussmechanismus
- 36: Klappe
- 37: verjüngter Bereich
- 600: System mit oberem und unterem Teilsystem
- 601: Nadel
- 602: oberes Teilsystem
- 603: unteres Teilsystem
- 604: Nadelstangenantrieb
- 605: Zuleitungen für unteren Antrieb
- 606: Bereich zum Einlegen des zu verstärkenden Stoffes
- 607: Stange des Nadelstangenantriebs

## Patentansprüche

1. Vorrichtung zur Herstellung eines verstärkten Schaumwerkstoffes und zur Aufnahme eines textilen Halbzeuges (4) in einen Haken (16), die Vorrichtung aufweisend eine erste Untereinheit (6) mit einer Transportvorrichtung (1) und eine zweite Untereinheit (5) mit einer Aufnahmevorrichtung (3), wobei die Transportvorrichtung eingerichtet ist zur Beförderung des textilen Halbzeuges in die Aufnahmevorrichtung;
wobei die erste Untereinheit und die zweite Untereinheit derart eingerichtet sind, dass durch eine Relativbewegung der ersten Untereinheit relativ zur zweiten Untereinheit das textile Halbzeug in definierter Länge vorlegbar ist; und
wobei die Aufnahmevorrichtung der zweiten Untereinheit weiterhin derart eingerichtet ist,
dass durch eine Relativbewegung der Aufnahmevorrichtung relativ zum Haken das textile Halbzeug in den Haken einlegbar ist.

2. Vorrichtung gemäß Anspruch 1, die Vorrichtung weiterhin aufweisend:
mindestens ein Schneidwerkzeug (2), das derart eingerichtet ist, dass das textile Halbzeug in definierter Länge geschnitten werden kann.

3. Vorrichtung gemäß Anspruch 2,
wobei das Schneidwerkzeug an der ersten Untereinheit angebracht ist.

4. Vorrichtung nach einem der vorherigen Ansprüche, die Aufnahmevorrichtung weiterhin aufweisend:
einen vertikalen Spalt (14),
wobei der vertikale Spalt derart eingerichtet ist, dass der Haken in den Spalt einführbar ist; und
wobei die Relativbewegung der ersten Untereinheit relativ zur zweiten Untereinheit derart ausführbar ist, dass sich nach der Ausführung dieser Relativbewegung die Mitte des textilen Halbzeuges in der Mitte des Spaltes befindet.

5. System zur Herstellung eines verstärkten Schaumwerkstoffes aufweisend ein unteres Teilsystem (25) und ein oberes Teilsystem (24),
wobei zwischen den beiden Teilsystemen der zu verstärkende Schaumwerkstoff (19) anbringbar ist,
wobei das untere Teilsystem eine Vorrichtung gemäß einem der vorherigen Ansprüche aufweist; und
wobei das obere Teilsystem einen Nadelstangenantrieb (604) aufweist.

6. Verfahren zur Aufnahme von textilen Halbzeugen (4) in einem Haken (16) zur Verstärkung von Materialien, das Verfahren aufweisend die folgenden Schritte:
Vorlegen des Halbzeugs auf einer Unterseite des zu verstärkenden Materials;
Positionieren der Halbzeugmitte an den Ort der Aufnahme;
Einstechen des Hakens in das zu verstärkende Material;
Einlegen des Halbzeugs in den Haken; und
Rückzug des Hakens mit gleichzeitiger Positionierung des Halbzeugs im zu verstärkenden Material; und
Durchtrennen des textilen Halbzeugs in definierter Länge vor dem Rückzug des Hakens an der Unterseite des zu verstärkenden Materials mittels eines Schneidwerkzeuges (2).

7. Verfahren gemäß Anspruch 6, zusätzlich aufweisend den folgenden Schritt:
Loslassen des textilen Halbzeuges aus dem Haken.

8. Verfahren gemäß Anspruch 6 bis 7,
wobei der Haken sich an einer Hakennadel befindet; und Ausführen einer Relativbewegung des Halbzeugs relativ zur Hakennadel, wodurch das Halbzeug in den Haken eingelegt wird.

9. Verfahren nach einem der Ansprüche 6 bis 8,
wobei die Verfahrensschritte wiederholt durchgeführt werden, und
wobei durch das Auslassen der Durchtrennung des textilen Halbzeugs eine geschlossene Naht entsteht.

10. Verfahren nach einem der Ansprüche 6 bis 9,
wobei das textile Halbzeug ein Faserbündel darstellt; und
wobei die Fasern in dem zu verstärkenden Material parallel und verstreckt abgelegt werden.

11. Verfahren nach einem der Ansprüche 6 bis 10,
wobei es sich bei dem Material um einen Schaumwerkstoff handelt.

12. Verfahren gemäß einem der Ansprüche 6 bis 11; weiterhin aufweisend die folgenden Schritte:
Bereitstellen einer Vorrichtung mit einer ersten Untereinheit (6) und einer zweiten Untereinheit (5),
wobei die erste Untereinheit eine Transportvorrichtung (1) aufweist ;
wobei die zweite Untereinheit eine Aufnahmevorrichtung (3) aufweist;
Befördern des textilen Halbzeuges durch die Transportvorrichtung in die Aufnahmevorrichtung.

13. Verfahren gemäß einem der Ansprüche 6 bis 12; weiterhin aufweisend den folgenden Schritt:
Ausführen einer Relativbewegung der ersten Untereinheit relativ zur zweiten Untereinheit wodurch das Vorlegen des Halbzeugs erfolgt.

## Claims

1. Apparatus for manufacturing a reinforced cellular material and for taking up a semi-finished textile product (4) in a hook (16), with the apparatus comprising a first sub-unit (6) with a transport device (1) as well as a second sub-unit (5) with an uptake device (3),
wherein the transport device is adapted to convey the semi-finished textile product into the uptake device;
wherein the first sub-unit and the second sub-unit are adapted such that as a result of a relative movement of the first sub-unit relative to the second sub-unit the semi-finished textile product can be laid at a defined length; and
wherein the uptake device of the second sub-unit is further adapted such that as a result of a relative movement of the uptake device relative to the hook the semi-finished textile product can be placed in the hook.

2. The apparatus of claim 1, the apparatus furthermore comprising:
at least one cutting device (2) that is adapted such that the semi-finished textile product can be cut to a defined length.

3. The apparatus of claim 2,
wherein the cutting device is attached to the first sub-unit.

4. The apparatus of any one of the preceding claims, with the uptake device further comprising:
a vertical gap (14);
wherein the vertical gap is embodied such that the hook can be inserted into the gap;
and
wherein the relative movement of the first sub-unit relative to the second sub-unit can be carried out such that after this relative movement has been carried out the middle of the semi-finished textile product is located in the middle of the gap.

5. A system for manufacturing reinforced cellular materials, which system comprises a bottom partial system (25) and a top partial system (24),
wherein the cellular material (19) to be reinforced can be placed between the two partial systems,
wherein the bottom partial system comprises apparatus according to any one of the preceding claims; and
wherein the top partial system comprises a needle bar drive (604).

6. A method for taking up semi-finished textile products (4) in a hook (16) for reinforcing materials, wherein the method comprises the following steps:
laying the semi-finished product onto a bottom face of the material to be reinforced;
positioning the middle of the semi-finished product at the location of uptake;
inserting the hook into the material to be reinforced;
placing the semi-finished material in the hook; and
withdrawing the hook while at the same time positioning the semi-finished product in the material to be reinforced;
cutting the semi-finished textile product at a defined length at the bottom face of the material to be reinforced by means of a cutting implement (2).

7. The method of claim 6, additionally comprising the following step:
releasing the semi-finished textile product from the hook.

8. The method of any one of claims 6 to 7,
wherein the hook is situated on a hooked needle; and
performing a relative movement of the semi-finished product relative to the hooked needle, thereby placing the semi-finished product in the hook.

9. The method of any one of claims 6 to 8,
wherein the process steps are carried out repeatedly, and
wherein a closed seam is provided as a result of omitting to cut the semi-finished textile product.

10. The method of any one of claims 6 to 9,
wherein the semi-finished textile product is a fibre bundle; and
wherein the fibres are laid up so as to be parallel and stretched in the material to be reinforced.

11. The method of any one of claims 6 to 10,
wherein the material is a cellular material.

12. Method of one of claims 6 to 11, further comprising the steps of:
providing an apparatus having a first sub-unit (6) and a second sub-unit (5);
wherein the first sub-unit comprises a transport device (1);
wherein the second sub-unit comprises an uptake device (3);
transporting the semi-finished part via the transport device into the uptake device.

13. Method of one of claims 6 to 12, further comprising the following steps:
performing a relative movement of the first sub-unit relative to the second sub-unit, thereby providing the laying of the semi-finished part.

## Revendications

1. Dispositif de fabrication d'une mousse renforcée et de réception d'un produit semi-fini textile (4) dans un crochet (16), le dispositif comprenant une première unité secondaire (6) avec un dispositif de transport (1) et une seconde unité secondaire (5) avec un dispositif de réception (3), le dispositif de transport étant conçu pour transporter le produit semi-fini textile dans le dispositif de réception ;
la première unité secondaire et la seconde unité secondaire étant conçues de telle sorte que le produit semi-fini textile est présentable sur une longueur définie par un mouvement relatif de la première unité secondaire par rapport à la seconde unité secondaire ; et
le dispositif de réception de la seconde unité secondaire étant en outre conçu de telle sorte que le produit semi-fini textile peut être inséré dans le crochet par un mouvement relatif du dispositif de réception par rapport au crochet.

2. Dispositif selon la revendication 1, le dispositif comprenant en outre:
au moins un outil de coupe (2), qui est conçu de telle sorte que le produit semi-fini textile peut être découpé à une longueur définie.

3. Dispositif selon la revendication 2, dans lequel l'outil de coupe est monté sur la première unité secondaire.

4. Dispositif selon l'une des revendications précédentes, le dispositif de réception comprenant en outre :
une fente verticale (14),
la fente verticale étant conçue de telle sorte que le crochet peut y être introduit ; et
le mouvement relatif de la première unité secondaire par rapport à la seconde unité secondaire étant réalisable de telle sorte que, après l'exécution de ce mouvement relatif, le centre du produit semi-fini textile se situe au centre de la fente.

5. Système de fabrication d'une mousse renforcée comprenant un système partiel inférieur (25) et un système partiel supérieur (24),
la mousse (19) à renforcer pouvant être mise en place entre les deux systèmes partiels,
le système partiel inférieur présentant un dispositif selon l'une des revendications précédentes ; et
le système partiel supérieur présentant un entraînement par barre à aiguille (604).

6. Procédé de réception de produits semi-finis textiles (4) dans un crochet (16) pour le renforcement de matières, le procédé comprenant les étapes suivantes :
présentation du produit semi-fini sur un côté inférieur de la matière à renforcer ;
positionnement du centre du produit semi-fini à l'emplacement de la réception ;
piquage du crochet dans la matière à renforcer ;
insertion du produit semi-fini dans le crochet et ;
recul du crochet avec positionnement simultané du produit semi-fini dans la matière à renforcer ; et
séparation du produit semi-fini textile à longueur définie, avant le recul du crochet, sur le côté inférieur de la matière à renforcer au moyen d'un outil de coupe (2).

7. Procédé selon la revendication 6, comprenant l'étape supplémentaire suivante :
détachement du produit semi-fini textile du crochet.

8. Procédé selon les revendications 6 à 7,
le crochet se situant sur une aiguille à bec ; et
exécution d'un mouvement relatif du produit semi-fini par rapport à l'aiguille à bec, le produit semi-fini étant de ce fait inséré dans le crochet.

9. Procédé selon l'une des revendications 6 à 8,
les étapes de procédé étant réitérées, et
une couture fermée étant formée par l'omission de la séparation du produit semi-fini textile.

10. Procédé selon l'une des revendications 6 à 9,
le produit semi-fini textile constituant un faisceau de fibres ; et
les fibres étant déposées de façon parallèle et étirée dans la matière à renforcer.

11. Procédé selon l'une des revendications 6 à 10,
la matière étant une mousse.

12. Procédé selon l'une des revendications 6 à 11, comprenant en outre les étapes suivantes :
préparation d'un dispositif avec une première unité secondaire (6) et une seconde unité secondaire (5) ;
la première unité secondaire présentant un dispositif de transport (1) ;
la seconde unité secondaire présentant un dispositif de réception (3) ;
transport du produit semi-fini textile par le dispositif de transport dans le dispositif de réception.

13. Procédé selon l'une des revendications 6 à 12, comprenant en outre l'étape suivante :
exécution d'un mouvement relatif de la première unité secondaire par rapport à la seconde unité secondaire, la présentation du produit semi-fini s'effectuant de ce fait.
